# NEUE EUROPÄISCHE PATENTSCHRIFT

(11) **EP 2 356 401 B2**
(45) Veröffentlichungstag und Bekanntmachung des Hinweises auf die Entscheidung über den Einspruch: **23.03.2016**
(45) Hinweis auf die Patenterteilung: 17.10.2012
(21) Anmeldenummer: 09748810.0
(22) Anmeldetag: 12.11.2009
(51) Int. Cl.: G01B 11/00, G02B 6/36

(54) **OPTISCHES SENSORELEMENT FÜR EINE MESSMASCHINE, UND MESSMASCHINENSEITIGES KUPPLUNGSELEMENT HIERFÜR**
OPTICAL SENSOR ELEMENT FOR A MEASURING DEVICE AND COUPLING ELEMENT FOR THIS CONTAINING MEASURING DEVICE UNIT
ELÉMENT DE CAPTEUR OPTIQUE POUR UNE MACHINE DE MESURE ET ÉLÉMENT DE COUPLAGE DU CÔTÉ DE LA MACHINE DE MESURE CORRESPONDANT

(30) Priorität: 03.12.2008 EP 08170582
(43) Veröffentlichungstag der Anmeldung: 17.08.2011
(73) Patentinhaber: Leica Geosystems AG, 9435 Heerbrugg (CH)
(72) Erfinder: JENSEN, Thomas, CH-9400 Rorschach (CH); SAUPE, Frank, CH-9327 Tübach (CH); VULLIOUD, Benjamin, CH-1124 Gollion (CH)
(74) Vertreter: Kaminski Harmann
(86) Internationale Anmeldenummer: PCT/EP2009/065048
(87) Internationale Veröffentlichungsnummer: WO 2010/063544

(56) Entgegenhaltungen:
- EP-A- 0 362 625
- DE-A1-102006 016 056
- US-A- 5 118 956
- US-B2- 7 282 017
- US-B2- 7 427 165

## Beschreibung

Die Erfindung betrifft ein optisches Sensorelement für eine Messmaschine, insbesondere für eine Koordinatenmessmaschine, nach dem Oberbegriff von Anspruch 1 sowie ein messmaschinenseitiges Kupplungselement nach dem Oberbegriff von Anspruch 9.

Koordinatenmessgeräte oder -maschinen in verschiedenen Ausführungsformen sind seit langem bekannt. Beispielsweise werden diese Geräte zum mit hoher Genauigkeit erfolgenden Vermessen von Objektoberflächen verwendet, insbesondere in der fertigenden Industrie, für die das Vermessen und Überprüfen von Werkstückoberflächen hohe Bedeutung hat.

Typische gattungsgemässe Systeme sind Koordinatenmessmaschinen vom Portaltyp, wie sie beispielsweise in der DE 43 25 337 beschrieben werden, oder 3D-Koordinatenmess-Gelenkarme, die beispielsweise aus der US 5,402,582 oder EP 1 474 650 bekannt sind.

Solche Koordinatenmessmaschinen besitzen eine in einem Referenzkoordinatensystem bekannte und fix positionierte Basis als ein Ende des Messsystems oder des Gelenkarms und ein gegenüberliegendes bewegliches Messende, an dem ein Tastelement angeordnet ist. Als Standardtaster kann eine taktile Probe verwendet werden, welche in Kontakt mit einem Messpunkt einer Objektoberfläche gebracht werden kann und beispielsweise aus einer Rubinkugel besteht, die auf einem Messstab montiert ist. Bei solchen Koordinatenmessmaschinen beginnen zunehmend optische Sensorelemente an Bedeutung zu gewinnen.

Heutzutage wird die Messwelt stark von taktilen Tastelementen dominiert, die es in verschiedenen Ausführungsformen gibt, zum Beispiel um das Messobjekt axial oder seitlich anzutasten. Die Tastelemente sind dabei in unterschiedlichen Längen und Durchmessern ausgeführt, um auch schwer zugängliche Orte erreichen zu können.

Zur Kopplung der taktilen Tastelemente mit Koordinatenmessmaschinen, wurden mechanische und mechanisch-elektrische Kupplungen entwickelt, wie sie beispielsweise aus der US 7,282,017 B2 hervorgehen, die eine sehr reproduzierbare mechanische Kopplung überdrei Kugel-Zylinder-Kontakte erlauben und übergefederte Pin-Kontakte auch eine elektrische Übertragung von Messsignalen ermöglichen. Diese Schnittstellen sind so ausgelegt, dass die Tastelemente in einem Werkzeugwechsler Platz finden und von der Koordinatenmessmaschine selbständig aufgenommen werden können.

EP 0 362 625 zeigt ein Koordinatenmessgerät mit einem optischen Tastkopf mit auswechselbaren Frontoptiken am Messarm, wobei jede Frontoptik ein eigenes Objektiv und eine angepasste Beleuchtungsoptik besitzt. Die Beleuchtungsoptik wird durch Lichtleiter versorgt, welche über die Wechselfläche mit einer Einrichtung zur verlustarmen Kopplung der Lichtleiterenden für die Beleuchtung ausgestattet ist. Diese Einrichtung besteht beispielsweise aus selbstzentrierenden Hülsen, von denen die flexiblen Versorgungslichtleiter zentrisch auf die Endflächen von halbstarren Kunststofflichtleitern aufgesetzt werden um Zwickelverluste zu vermeiden. Die Lichtleiter dienen dabei lediglich zur Beleuchtung, nicht zur Übertragung von Messsignalen.

In US 5,118,956 wird ein optisches, taktiles Sensorelement gezeigt, welches anhand Änderungen in den Parametern einer optischen Strahlung, eine Berührung des Tasters mit einem Werkstück ermittelt.

Die neuen optischen Messverfahren für Koordinatenmessmaschinen bringen es jedoch mit sich, dass auch eine optische Faser von einem Sensorelement zu einer Steuereinheit der Koordinatenmessmaschine geführt werden muss, die als optischer Leiter und zur optischen Signalübertragung für die Messstrahlung verwendet wird. In Ermangelung leistungsfähiger optischer Kupplungen, die häufige Sensorelementwechsel ermöglichen, konnten bislang nur Koordinatenmessmaschinen realisiert werden, an denen ein Sensorelement dauerhaft befestigt ist.

Geeignete optische Fasern sind in der Telekommunikation zur Signalübertragung weit verbreitet. Zur Kopplung dieser optischen Fasern existiert eine Vielzahl von Steckkupplungen, die auf die jeweiligen Anwendungszwecke abgestimmt sind und es ermöglichen, auch hochenergetische optische Strahlung über die optischen Fasern und die Steckkupplungen bei geringen Verlusten zu übertragen.

Beispielsweise zeigt US 7,427,165 eine kombinierte elektrisch-optische Steckverbindung. Mittels einer Art Bajonett-Verschluss ist dabei sowohl eine umfangsseitige elektrische Verbindung als auch eine optische Verbindung mittels einer zentrisch optische Faser und einem schwimmend gelagerten Gegenstück, herstellbar.

Die Steckkupplungen weisen allerdings einen entscheidenden Nachteil auf: Sie sind für statische Verbindungen geschaffen worden. Aufgrund der hohen Empfindlichkeit der optischen Schnittstelle gegenüber Verschmutzung und Beschädigung können sie nicht häufig gesteckt werden. Die prognostizierte Lebensdauer der bekannten Kupplungen beträgt 500 bis 1000 Steckzyklen. In der Praxis werden sie aber nur zu Servicezwecken geöffnet. Zudem ist, um eine optimale Übertragung zu gewährleisten, die Reinigung der Oberflächen der optischen Fasern an der optischen Schnittstelle untereinem Mikroskop vor einem erneuten Zusammenstecken erforderlich.

Um komplexe Messobjekte, wie zum Beispiel Motorblöcke, mit einer Koordinatenmessmaschine vermessen zu können, ist ein relativ häufiger Wechsel des Sensorelements erforderlich. Grob geschätzt ist ein Sensorelementwechsel etwa einmal in der Stunde erforderlich. Da die Koordinatenmessmaschinen oftmals rund um die Uhr betrieben werden, werden leicht 100 Steckzyklen pro Woche erreicht, so dass die aus der Telekommunikation bekannten optischen Steckkupplungen bereits nach ca. 3 Monaten das Ende ihrer erwarteten Lebensdauer erreichen würden.

Damit optische Sensorelemente in Koordinatenmessmaschinen sinnvoll eingesetzt werden können, müssen die optischen Kupplungen zumindest die gleichen Anforderungen hinsichtlich Robustheit und Präzision erfüllen wie die mechanischen oder mechanischelektrischen Kupplungselemente.

Ausgehend von diesem Stand der Technik liegt der Erfindung die Aufgabe zugrunde, ein optisches Sensorelement und eine Messmaschine aufzuzeigen, bei denen die mechanische Kupplung um einen optischen Teil ergänzt ist, wobei die optische Schnittstelle wenigstens 50.000 Steckungen unbeschadet überstehen können muss, sich leicht reinigen lässt und auch bei geringen Verschmutzungen eine zuverlässige Fortführung der Messungen gestattet.

Der erste Teil der Aufgabe wird durch ein optisches Sensorelement für eine Messmaschine mit den Merkmalen des Anspruchs 1 bzw. ein messmaschinenseitiges Kupplungselement mit den Merkmalen des Anspruchs 9 gelöst. Vorteilhafte Ausführungsformen des optischen Sensorelements gehen aus den abhängigen Ansprüchen hervor.

Das optische Sensorelement weist ein sensorelementseitiges Kupplungselement zur mechanischen und optischen Verbindung mit der Messmaschine bzw. dessen maschinenseitigen Kupplungselement auf. Erfindungsgemäss weist das optische Sensorelement ferner eine optische Faser im sensorelementseitigen Kupplungselement und eine optische Schnittstelle auf, welche durch eine schwimmende Lagerung geführt ist.

Vorteilhafterweise ist das dem sensorelementseitigen Kupplungselement zugeordnete optische Kontaktelement mit einem Schrägschliff ausgebildet und weist einen gegenüber dem optischen Faserkern vergrösserten Strahlquerschnitt auf.

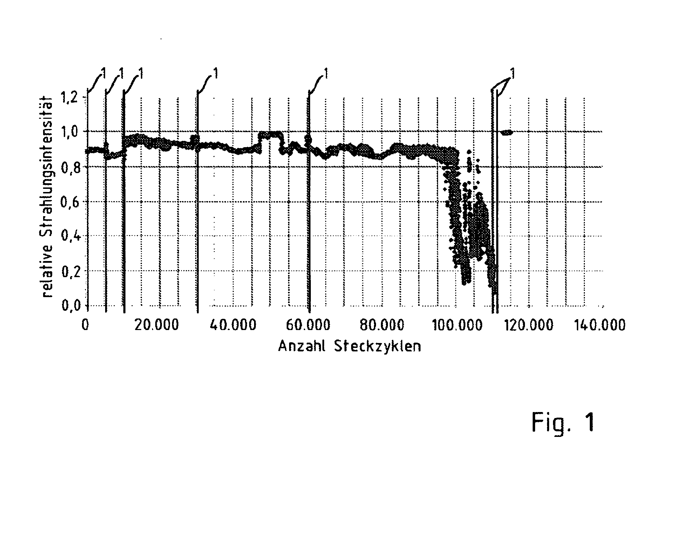

Diese Lösung hatden Vorteil, dass das optische Sensorelement besonders robust ist und, wie sich bei Versuchen gezeigt hat, über 115.000 Steckungen übersteht, was auch in Fig. 1 seine Darstellung findet.

Optische Sensorelemente werden für Koordinatenmessmaschinen eingesetzt, um Oberfläche von Werkstücken oder anderen Objekten berührungslos und hochpräzise abzutasten und zu vermessen oder eine Masshaltigkeit zu überprüfen.

Bei dererfindungsgemässen Kupplung wird als optische Faser zur Messsignalübertragung insbesondere eine Single-Mode-Faser eingesetzt, die einen Kerndurchmesser von unter 10 µm hat und ausserordentlich anfällig für irreversible Verschmutzungen und Beschädigungen im Kernbereich ist. Solche Verschmutzungen oder Beschädigungen erhöhen sehr schnell den Transmissionsverlust und die Rückstreuung, was insbesondere bei hochempfindlichen interferometrischen Anwendungen äusserst nachteilig ist. Hier setzt nun die Erfindung an und schlägt vor, an die optische Faser ein optisches Kontaktelement anzusetzen, vorzugsweise anzuschweissen, das den Strahlquerschnitt an der optischen Schnittstelle um ein Vielfaches gegenüber der optischen Faser aufweitet. Der Strahlverlauf an der optischen Schnittstelle sollte dabei kollimiert sein. Durch den verbreiterten Strahlquerschnitt ist eine bidirektionale optische Signalübertragung auch dann gewährleistet, wenn Bereiche der optischen Schnittstelle durch Verschmutzungen oder Beschädigungen für die optische Strahlung undurchlässig geworden sind. Weiterhin werden die Einfügungsdämpfung und die Rückstreuung durch den Schrägschliff an einer Stirnseite des Kontaktelements wesentlich reduziert. Die schräg geschliffene Fläche muss nicht beschichtet sein und ist leicht zu reinigen.

Zweckmässigerweise ist der Strahlquerschnitt gegenüber dem optischen Faserkern mindestens um den Faktor 5 vergrössert. Vorzugsweise ist die Strahlquerschnittsfläche mindestens um den Faktor 10, 20 oder 50 vergrössert. Der vergrösserte Stahlquerschnitt verringert die Anfälligkeit des Sensorelements für Verschmutzungen und Beschädigungen sowie für den Fall, dass die Kontaktelemente nicht vollflächig aneinander zur Anlage gelangen.

Vorteilhaft ist es, wenn das optische Kontaktelement eine Linse, vorzugsweise eine Gradientenindex-Linse, ist. Gradientenindex-Linsen haben den grossen Vorteil, dass sie zylinderförmig ausgeführt und damit auch in Verlängerung der optischen Faser vorgesehen werden können. Die Gradientenindex-Linse erlaubt abhängig von ihrer Länge und der verwendeten Monomodefaser eine Aufweitung des Strahlquerschnitts ca. um den Faktor zehn - einhergehend mit einer Divergenzabnahme auf ein Zehntel. Allerdings sind erfindungsgemäss auch Multimode-Fasern verwendbar, wobei hier das Erfordernis einer Strahlaufweitung im Übergangsbereich entfallen kann.

Die optische Faser sollte zweckmässigerweise von einer Ferrule oder Endhülse umgeben sein. Die Ferrule schützt dabei das Ende der optischen Faser und fixiert dessen Position. Zudem kann die Ferrule besser als die optische Faser im Kupplungselement angeordnet werden.

Die Ferrule sollte bündig mit dem optischen Kontaktelement abschliessen, um eine einwandfreie Anlage der schräg geschliffenen Stirnfläche des optischen Kontaktelements zu gewährleisten.

Damit das optische Sensorelement leichter in das messmaschinenseitige Kupplungselement eingesteckt werden kann, wird Ferrule schwimmend im Kupplungselementangeordnet. Auf diese Weise kann ein seitlicher Versatz der Ferrule von einigen 100 µm beim Einstecken korrigiert werden.

Zweckmässigerweise weist die Ferrule auf einer Umfangsseite eine Orientierungsfläche zum Halten der Ferrule in einer zugeordneten Orientierung auf. Dies gewährleistet, dass die schräg geschliffenen Stirnflächen vollflächig aneinander zur Anlage gelangen, wenn das optische Sensorelement an die Messmaschine angekuppelt wird.

Die Ferrulen können durch eine Feder, vorzugsweise in axialer Richtung der optischen Faser, beaufschlagt sein, zur Erzeugung eines Anpressdrucks an der optischen Schnittstelle.

An einem freien Ende der Ferrule ist zweckmässigerweise eine Fase vorgesehen, um durch die konische Ausgestaltung das Einstecken der Ferrule zu erleichtern.

Die Messmaschine, insbesondere eine Koordinatenmessmaschine, weist ein messmaschinenseitiges Kupplungselement auf, das mit einem Sensorelement gemäss einem der Ansprüche 1 bis 8 koppelbar ist.

Im messmaschinenseitigen Kupplungselement und dem sensorelementseitigen Kupplungselement sind optische Fasern vorgesehen, die endseitig in Ferrulen gefasst sind. Dabei weist auch das messelementseitige Kupplungselement ein optisches Kontaktelement auf. Vorzugsweise sind die Schrägschliffe der optischen Kontaktelemente so ausgebildet und angeordnet, dass sich diese im gekoppelten Zustand vollflächig berühren und eine durchgehende optische Durchtrittsfläche bilden. Auf diese Weise kann die optische Strahlung verlustarm und in beiden Richtungen über die optische Schnittstelle übertragen werden.

Weiterhin kann eine der Ferrulen von einer Führungsbuchse umgeben sein, welche in axialer Richtung über die Ferrule hinausragt und an deren freiem Ende vorzugsweise an der Innenfläche eine Fase vorgesehen ist. Eine solche Führungsbuchse erleichtert ebenfalls das Zusammenführen der optischen Kontaktelemente beim Kopplungsvorgang. Die ebenfalls schwimmende Lagerung der zweiten Ferrule in der Führungsbuchse in Verbindung mit den Fasen an den Endhülsen und der Führungshülse ermöglichteine Selbstzentrierung im Einsteckvorgang, die die mechanischen Toleranzen in der Ausrichtung der Ferrulen vordem Steckkontakt erheblich entspannen.

Um einen vor dem Einsteckvorgang eventuell bestehenden seitlichen Versatz zwischen den Ferrulen weiter reduzieren zu können, ist zudem vorgesehen, dass die Innenfläche der Führungsbuchse eine Rundheit mit einer radialen Abweichung deutlich kleiner als der Kerndurchmesser der verwendeten Faser ist. Bei normalen Monomodefasern mir einem Kerndurchmesser von ca. 9 µm bei 1.5 µm Wellenlänge sollte die Rundheit kleiner gleich 1 µm sein, wodurch eine präzise Zentrierung der in den Ferrulen gefassten optischen Kontaktelemente bewirkt wird.

Besonders vorteilhaft ist es, wenn die Führungsbuchse und/oder die Ferrule im Kupplungselement auswechselbar angeordnet ist. Dies erlaubt es, die optische Faser mit Ferrule aus dem Kupplungselement auszubauen und die Stirnfläche des optischen Kontaktelements zu reinigen. Vorzugsweise ist zum Lösen und Fixieren der Führungsbuchse oder Ferrule ein Spezialwerkzeug zu verwenden, um ein unbefugtes Manipulieren der Kupplung zu erschweren.

Weiterhin kann am Ende der optischen Faser ein Abdeckelement zur Abdeckung der Stirnfläche des optischen Kontaktelements im geöffneten Zustand der Kupplung vorgesehen sein. Die Intensität der in Koordinatenmessmaschinen verwendeten optischen Strahlung ist zwar gering, dennoch kann es zu Verletzungen kommen, wenn die optische Strahlung direkt auf empfindliche Körperteile, wie zum Beispiel die Sehnerven trifft. Ein weiterer Vorteil des Abdeckelements ist, dass die schräg geschliffene Stirnfläche des optischen Kontaktelements im ausgesteckten Zustand vor Beschädigungen und Verschmutzungen geschützt wird.

Die Ferrulen und die Führungsbuchse sind vorzugsweise aus Zirkonoxid gefertigt. Zirkonoxid ist ein sehr abriebfestes Material und gewährleistet über die Lebensdauer des Sensorelements eine gleichbleibende Präzision der Steckung. Weiterhin kann an einem Kupplungselement eine Reinigungsvorrichtung zur Reinigung der schräg geschliffenen Stirnflächen deroptischen Kontaktelemente vorgesehen sein. Die Reinigungsvorrichtung kann so ausgebildet sein, dass ein Reinigungselement beim Einstecken und beim Ausstecken über die schräg geschliffene Stirnfläche gewischt wird.

Die schräg geschliffenen Stirnflächen der optischen Kontaktelemente können einen Neigungswinkel α zwischen 0° und 10°, vorzugsweise zwischen 2° und 8°, aufweisen.

Um mögliche Rückstrahlungen an der optischen Schnittstelle weiter zu reduzieren, kann die Stirnfläche eines der optischen Kontaktelemente mit einer Beschichtung, insbesondere einer Antireflektionsbeschichtung, versehen sein. In diesem Fall kann die Stirnfläche auch eben poliert sein, d.h. nicht über einen Schrägschliff verfügen. Auf den Schrägschliff und eine Beschichtung kann ebenfalls verzichtet werden, wenn das Messverfahren auf Rückreflexe nicht sensibel reagiert.

Nichtinterferometrische Messverfahren wie z.B. die chromatisch-konfokale Messung benötigen multimodige Fasern. In diesem Fall ist der Durchmesser des Faserkerns (z.B. 50 µm) bereits deutlich größer als bei monomodigen Fasern. Eine Strahlaufweitung ist hier nicht weiter erforderlich.

Die Erfindung ist nachfolgend anhand von in den Figuren dargestellten Ausführungsbeispielen näher erläutert. Es zeigen:
- Figur 1: eine graphische Auswertung eines Lebensdauertests;
- Figur 2: einen Ausschnitt aus einem optischen Sensorelement, wobei ein sensorelementseitiger Kupplungselement im Querschnitt dargestellt ist;
- Figur 3: ein Querschnitt an der optischen Schnittstelle im eingekuppelten Zustand;
- Figur 4: eine Draufsicht auf den sensorelementseitigen Kupplungselement;
- Figur 5: eine perspektivische Ansicht des sensorelementseitigen Kupplungselements;
- Figur 6: eine weitere perspektivische Ansicht des sensorelementseitigen Kupplungselements;
- Figur 7: ein messmaschinenseitiges Kupplungselement im Querschnitt;
- Figur 8: das messmaschinenseitige Kupplungselement in einer Ansicht von unten;
- Figur 9: das messmaschinenseitige Kupplungselement in einer perspektivischen Ansicht; und
- Figur 10: das messmaschinenseitige Kupplungselement in einer perspektivischen Ansicht von schräg oben.

In der Figur 1 ist eine graphische Auswertung eines Lebensdauertests gezeigt. Es wurde die relative Intensität der über die optische Kupplung übertragenen Strahlung in Abhängigkeit von der Anzahl der Steckzyklen gemessen, wobei die relative Intensität das Verhältnis der Intensitäten der optischen Strahlung nach und vor der optischen Kupplung ist. Hierbei wurden die Stirnflächen der optischen Kontaktelemente in unregelmässigen Abständen gereinigt, was durch senkrechte Striche 1 verdeutlicht ist. Bis zu einer Anzahl von über 95.000 Steckzyklen übertrug die Kupplung die optische Strahlung mit einer relativen Intensität im Bereich von 0,8 bis 1. Erst um den 100.000 Steckzyklus kommt es zu einem merklichen Abfall der relativen Strahlungsintensität. Nach einer mehrfachen intensiven Reinigung der optischen Kontaktelemente bei 115.000 Steckzyklen konnte aberwiedereine annähernd verlustfreie Übertragung mit einer relativen Strahlungsintensität von 1 erreicht werden.

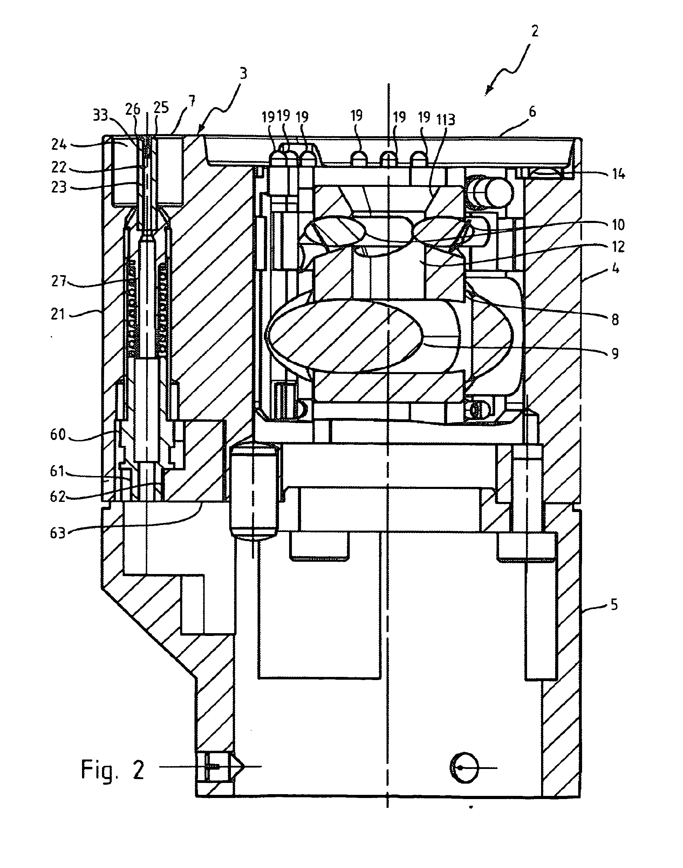

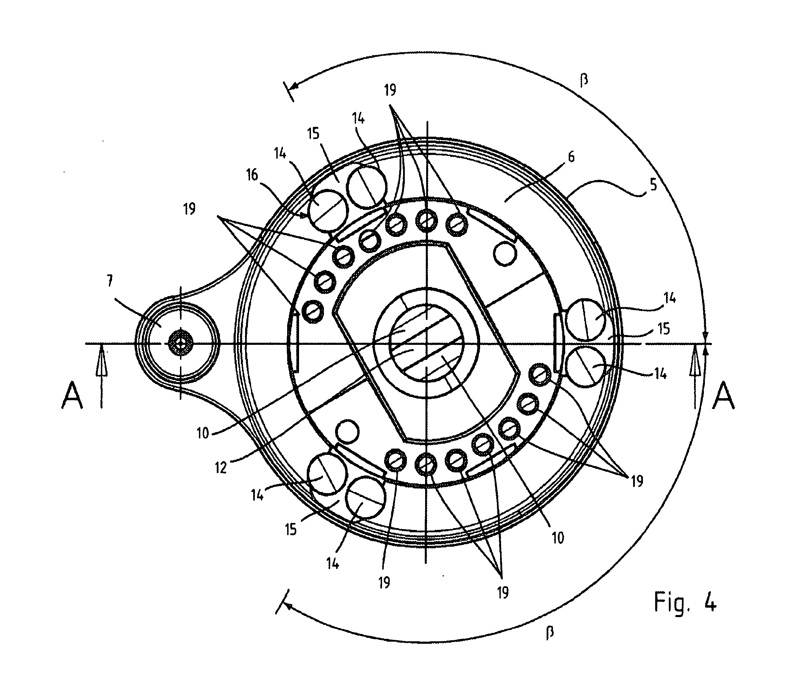

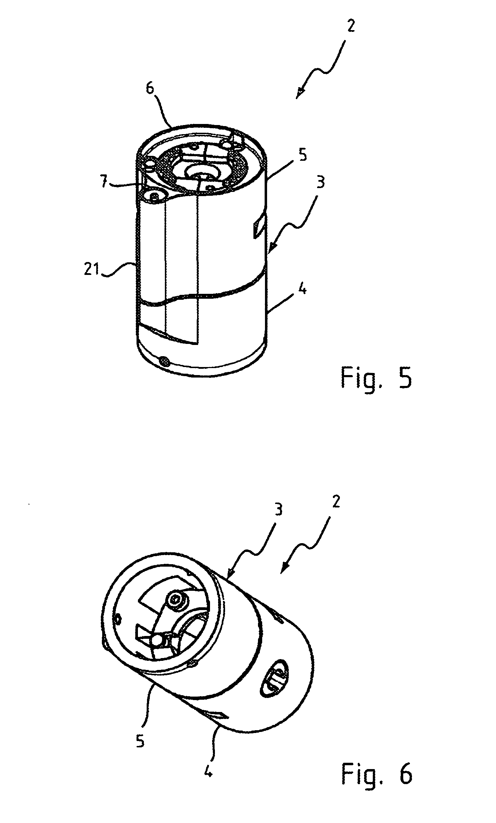

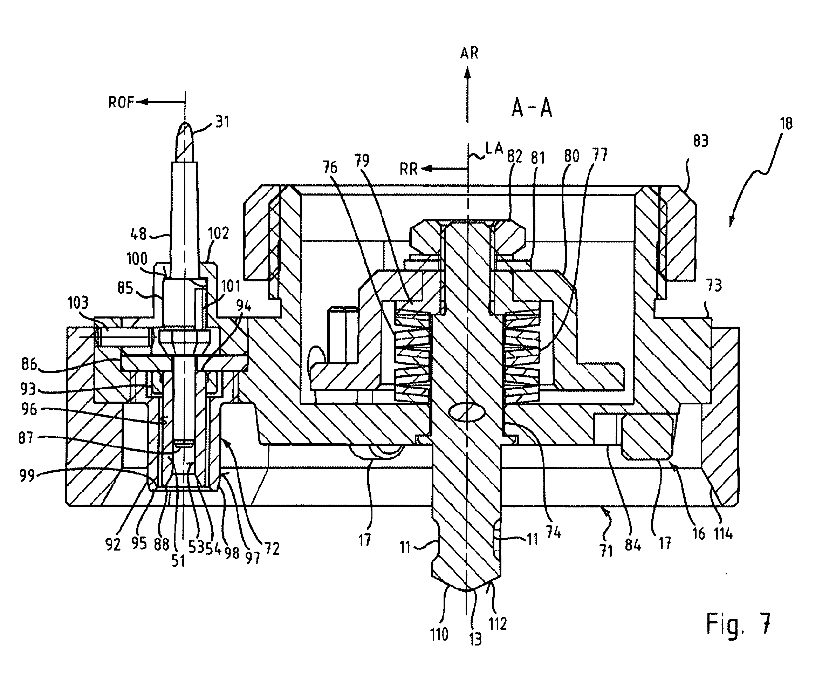

In den Figuren 2 und 4 bis 6 ist ein optisches Sensorelement 2 für eine Messmaschine, insbesondere für eine Koordinatenmessmaschine, ausschnittsweise anhand eines sensorelementseitigen Kupplungselements 3 dargestellt. Das sensorelementseitige Kupplungselement 3 ist zur mechanischen und optischen Verbindung und optischen Signalübertragung mit einer Messmaschine vorgesehen. Das sensorelementseitige Kupplungselement 3 weist in dieser Ausführungsform ein Oberteil 4 und ein Unterteil 5 auf. Das Oberteil 4 ist in einen mechanisch-elektrischen Teil 6 und einen optischen Teil 7 gegliedert. Der mechanisch-elektrische Teil 6 ist im Prinzip aus der US 7,282,017 B2 bekannt. Im Oberteil 4 ist eine Hülse 8 axial verschiebbar gelagert, die durch einen Exzenter 9 bewegbar ist. Verriegelungsstifte 10 gelangen im eingekuppelten Zustand in Rillen 11 eines in eine Axialbohrung 12 eingeschobenen Zapfens 13 verriegelnd zur Anlage (vgl. auch Fig. 7). Im radial äusseren Bereich des mechanisch-elektrischen Teils 6 sind drei Paare von Kugeln 14 in Modulen 15 angeordnet, die Teile einer Dreipunktlagerung 16 sind. An diesen Kugeln 14 gelangen im gekoppelten Zustand Zylinder 17, die im messmaschinenseitigen Kupplungselement 18 vorgesehen sind, zur Anlage.

Zwischen dem Oberteil 4 und der Hülse 8 sind federbeaufschlagte elektrische Pin-Kontakte 19 zur elektrischen Messsignalübertragung vorgesehen.

In der Bildebene links des mechanisch-elektrischen Teils 6 ist der optische Teil 7 im Oberteil 4 angeordnet. An das Oberteil 4 ist hierzu ein Ausleger 21 angeformt, in dem der optische Teil 7 aufgenommen ist. Durch das Unterteil 5 erstreckt sich eine messsignalführende optische Faser 22 bis in den optischen Teil 7 des Oberteils 4 und ist endseitig in einer Ferrule 23 gefasst. Die Ferrule 23 ragt in eine zylindrische Ausnehmung 24 im Oberteil 4 hinein und weist an ihrem freien Ende 25 eine Fase 26 auf. Die Ferrule 23 ist in axialer Richtung der optischen Faser 22 durch eine Feder 27 beaufschlagt. Zum Ausgleich eines seitlichen Versatzes sind die Ferrule 23 und damit auch die optische Faser 22 im optischen Teil 7 schwimmend gelagert.

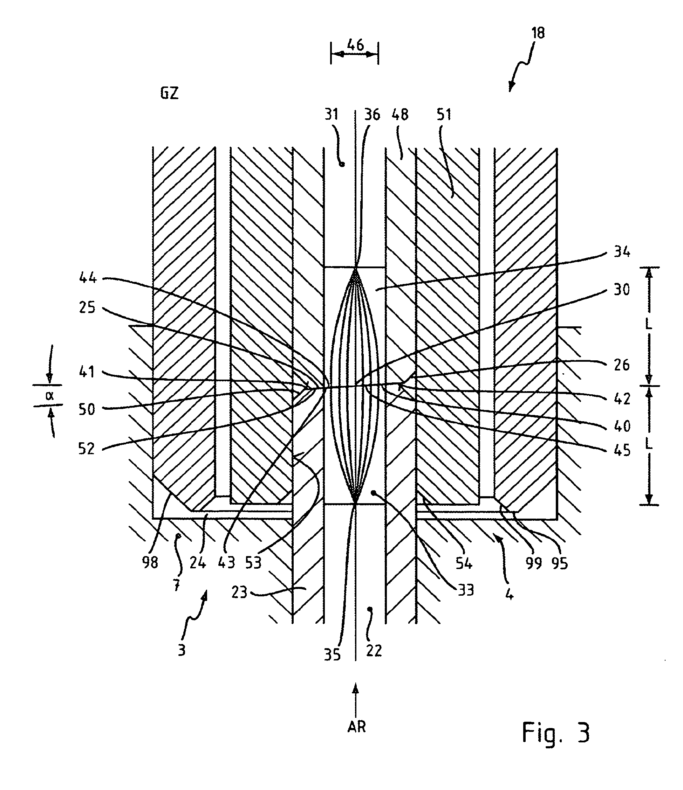

Eine optische Schnittstelle 30, an welcher die optische Faser 22 des sensorelementseitigen Kupplungselements 3 mit der optischen Faser 31 des messmaschinenseitigen Kupplungselements 18 gekoppelt ist, ist im gekoppelten Zustand (GZ) in Figur 3 schematisch vereinfacht gezeigt. Auf dieser Figur erkennt man zwei optische Fasern 22, 31, die miteinander über ein optisches Sensorkontaktelement 33 und ein optisches Maschinenkontaktelement 34 gekoppelt sind. Bei den optischen Fasern 22, 31 handelt es sich um Single-Mode-Fasern mit meinem Kernquerschnitt von weniger als 10 µm. An die Enden 35, 36 der optischen Fasern 22, 31 sind optische Kontaktelemente 33, 34, in diesem Fall beispielhaft Gradientenindex-Fasern, angeschweisst. Die optische Schnittstelle 30 befindet sich in der Fläche 40, in der sich die optischen Kontaktelemente 33, 34 vollflächig berühren.

Die Stirnflächen 41, 42 der optischen Kontaktelemente 33, 34 sind jeweils mit einem Schrägschliff 43, 44 versehen, der einen Neigungswinkel α von 4° aufweist. Die Schrägschliffe 43,44 sind so ausgebildet, dass sie eine durchgehende optische Durchtrittsfläche 45 bilden. Um den Strahlquerschnitt 46 an der optischen Schnittstelle 30 gegenüber den optischen Fasern 22, 31 zu vergrössern, weisen die optischen Kontaktelemente 33, 34 geeignete Längen L von 1/4 Pitch auf. Längen von (2n-1)/4 Pitch, wobei n eine natürliche Zahl ist, sind aber ebenfalls möglich. Derart ausgeführte optische Kontaktelemente 33, 34 bewirken eine kollimierte Aufweitung des optischen Strahlung, so dass der Strahlquerschnitt 46 gegenüber den optischen Fasern 22, 31 an der optischen Schnittstelle 30 um den Faktor 100 vergrössert ist.

Die optischen Fasern 22, 31 und die optischen Kontaktelemente 33, 34 sind in Ferrulen 23, 48 gefasst. Die Ferrulen 23, 48 schliessen mit den Stirnflächen 41, 42 der Kontaktelemente 33, 34 in Verlängerung der Schrägschliffe 43, 44 bündig ab. Die Ferrulen 23, 48 sind endseitig mit einer Fase 26, 50 versehen.

Eine Ferrule 48 ist von einer Führungsbuchse 51 umgeben, die in axialer Richtung AR über das freie Ende 52 der Ferrule 48 hinausragt. Die Führungsbuchse 51 ist an der Innenfläche 53 endseitig mit einer Fase 54 versehen. ZurZentrierung der optischen Kontaktelemente 33, 34 weist die Innenfläche 53 der Führungsbuchse 51 eine Rundheit mit einer radialen Abweichung von maximal 2 µm auf.

Zurückkehrend zu den Figuren 2 und 4 bis 6 ist an der optischen Faser 22 in der Bildebene unterhalb der Feder 27 eine Hülse 60 vorgesehen, die auf einer Umfangsseite 61 mit einer Orientierungsfläche 62 versehen ist, um die korrekte Ausrichtung der schräg geschliffenen Stirnfläche 41 des optischen Kontaktelements 33 zu gewährleisten. Hierzu liegt ein in das Oberteil 4 eingesetztes Orientierungselement 63 an der Orientierungsfläche 62 an.

Wird das Unterteil 5 vom Oberteil 4 abgeschraubt und das Orientierungselement 63 aus dem Oberteil 4 mit einem Werkzeug herausgenommen, so kann die optische Faser 22 und mit ihr die Ferrule 23, z.B. zum Austausch defekter Teile oder auch zu Reinigungszwecken aus dem Oberteil 4 nach unten herausgezogen werden. Mithin ist die Ferrule 23 auswechselbar im Oberteil angeordnet.

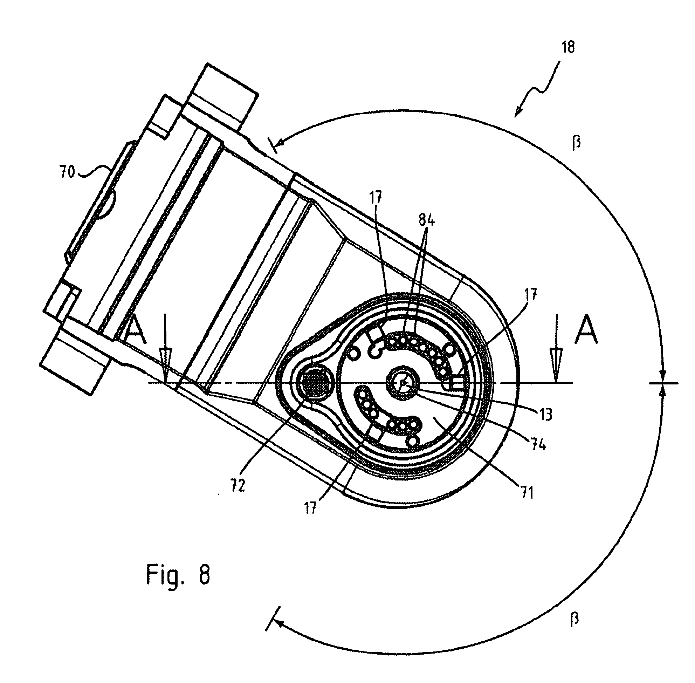

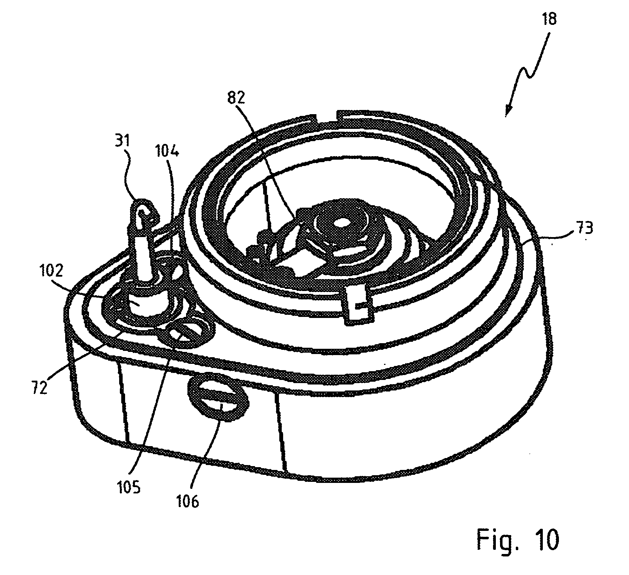

In den Figuren 7 bis 10 ist ein messmaschinenseitiges Kupplungselement 18 dargestellt. Das messmaschinenseitige Kupplungselement 18 ist in einer Halterung als Teil des Messmaschinenkopfes 70 angeordnet, die in an einer nicht näher dargestellten Messmaschine, insbesondere an einem bewegbaren Arm der Messmaschine, befestigbar ist.

Entsprechend dem sensorelementseitigen Kupplungselement 3gliedert sich auch das messmaschinenseitige Kupplungselement 18 in einen mechanisch-elektrischen Teil 71 und optischen Teil 72.

Der mechanisch-elektrische Teil 71 ist ebenfalls in seinem Aufbau im Prinzip aus der US 7,282,017 B2 bekannt. Im messmaschinenseitigen Kupplungselement 18 ist ein Einsatz 73 vorgesehen, der eine zentrale axiale Bohrung 74 aufweist, durch die der Zapfen 13 gesteckt ist. Der Zapfen 13 ist durch einen Stapel 76 Tellerfedern 77 in axialer Richtung AR beaufschlagt, um einen gleichmässigen Anpressdruck an der Dreipunktlagerung 16 und einen Toleranzausgleich bereitzustellen. Die Dreipunktlagerung 16 umfasst im messmaschinenseitigen Kupplungselement 18 drei Zylinder 17, die um Winkel β von 120° um die Längsachse LA des messmaschinenseitigen Kupplungselements 18 versetzt zueinander angeordnet sind. Der Stapel 76 Tellerfedern 77 wird durch eine Flanschhülse 79 und ein hutförmiges Teil 80 in Position gehalten. Die Flanschhülse 79 und das hutförmige Teil 80 sind auf dem Zapfen 13 durch eine Unterlegscheibe 81 und eine Mutter 82 fixiert. Das messmaschinenseitige Kupplungselement 18 ist durch einen aufgeschraubten Ring 83 an dem Messmaschinenkopf 70 befestigt.

In radialer Richtung RR zwischen der Längsachse LA des Kupplungselements 18 und den Zylindern 17 der Dreipunktlagerung 16 sind zur elektrischen Übertragung von Messsignalen dreizehn Leitungselemente 84 auf dem Umfang verteilt angeordnet, an denen die Pin-Kontakte 19 des sensorelementseitigen Kupplungselements 3 im eingesteckten Zustand zur Anlage gelangen.

Seitlich am mechanisch-elektrischen Teil 71 ist der optische Teil 72 vorgesehen. Eine optische Faser 31 ist in den messmaschinenseitigen Kupplungselement 18 geführt und endseitig in einer Ferrule 48 gefasst. Die Ferrule 48 weist einen Bund 85 auf, der an einer Scheibe 86 anliegt. Die Führungsbuchse 51 ist auf ein freies Ende 87 der Ferrule 48 geschoben und stützt sich an der Scheibe 86 ab. Die Führungsbuchse 51 weist an ihrem freien Ende 88 auf der Innenfläche 53 eine Fase 54 auf. Die Ferrule 48 und die Führungsbuchse 51 sind schwimmend im optischen Teil 72 gehalten, was deutlich anhand des radialen Abstandes zwischen einer Hülse 92 und der Führungsbuchse 51, welche von der Hülse 92 umgeben ist, erkennbar ist. Um die Führungsbuchse 51 gegen axiale Verschiebungen zu sichern, ist eine Fixierungshülse 93 auf das innere Ende 94 der Führungsbuchse 51 geschoben und dort fixiert. Die Hülse 92, die die Führungsbuchse 51 mit radialem Abstand umgibt, ist in den Einsatz 73 eingeschraubt. An ihrem freien Ende 95 weist die Hülse 92 sowohl auf der Innenseite 96 als auf der Umfangsseite 97 umlaufende Fasen 98, 99 auf.

Durch ein Spezialwerkzeug kann die Fixierungshülse 93 aus dem messmaschinenseitigen Kupplungselement 18 herausgeschraubt werden. Damit läßt sich die Führungsbuchse 51 herausnehmen und kann ggf. gereinigt oder ausgetauscht werden. In diesem Zustand ist auch die Ferrule 48 zum Reinigen gut zugänglich.

Die Ferrule 48 weist auf der der Führungsbuchse 51 abgewandten Seite 100 eine Orientierungsfläche 101 auf, um die schräg geschliffene Stirnfläche 42 des optischen Maschinenkontaktelements 34 derart auszurichten, dass eine vollflächige Anlage der Stirnflächen 41,42 der optischen Kontaktelemente 33, 34 gewährleistet ist, wie auch in Figur 3 gezeigt. In die Orientierungsfläche 101 greift ein Deckel 102 ein. Der Deckel 102 ist durch einen in radialer Richtung ROF zur optischen Faser 31 in den Einsatz 73 eingeschobenen Passstift 103 gegen Verdrehungen gesichert.

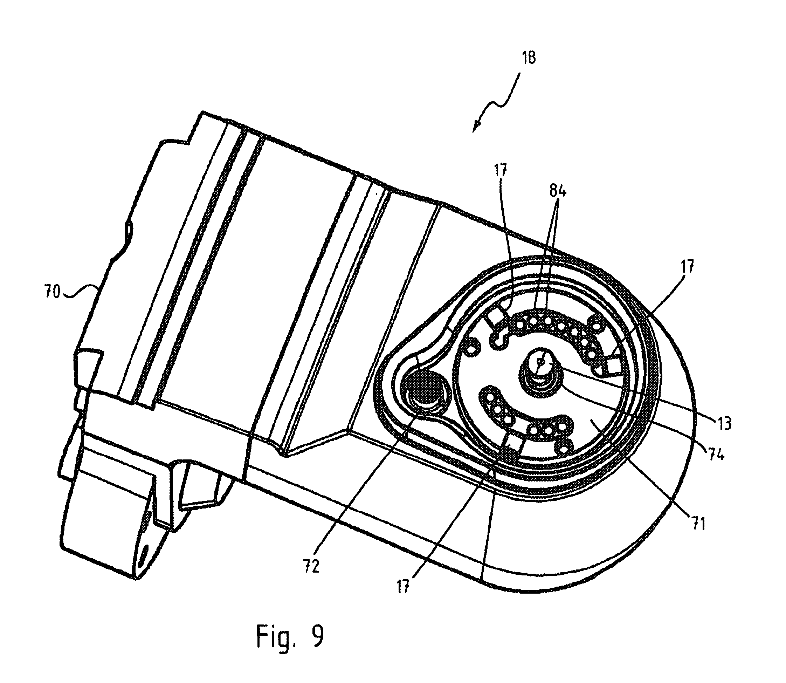

In Figur 9 ist gezeigt, wie der Deckel 102 des optischen Teils 72 durch zwei Schrauben 104, 105 am Einsatz 73 befestigt ist. Der Einsatz 73 ist ebenfalls durch zwei Schrauben 106 im messmaschinenseitigen Kupplungselement 18 fixiert.

Beide Kupplungselemente 3,18 sind so ausgebildet, dass beim Einsteckvorgang konische Flächen in einer vorbestimmten Abfolge zusammenwirken, um einen seitlichen Versatz auszugleichen und eine hochpräzise Kopplung der Kupplungselemente 3, 18 zu gewährleisten. Beim Einstecken kommen die konische Fläche 110 am freien Ende 112 des Zapfens 13 mit der trichterförmigen Erweiterung 113 der Axialbohrung 12 in derverschiebbaren Hülse 8 des sensorelementseitigen Kupplungselements 3 in Kontakt und eine umlaufende Fase 114 am messmaschinenseitigen Kupplungselement 18 am sensorelementseitigen Kupplungselement 3 zur Anlage. Zur Kopplung der optischen Teile 7, 72 wird zunächst die Hülse 92 am messmaschinenseitigen Kupplungselement 18 in die zylindrische Ausnehmung 24 im sensorelementseitigen Kupplungselement 3 eingeschoben, ehe in die schwimmend gelagerte Führungsbuchse 51 des messmaschinenseitigen Kupplungselements 18 die Ferrule 23 des sensorelementseitigen Kupplungselements 3 eingeschoben wird. Auf diese Weise kommen die schräg geschliffenen Stirnflächen 41, 42 der optischen Kontaktelemente 33,34 mit einem maximalen seitlichen Versatz von 2 µm aneinander zur Anlage.

### Bezugszeichenliste

- 1 -: Strich
- 2 -: Sensorelement
- 3 -: sensorelementseitiges Kupplungselement
- 4 -: Oberteil von 3
- 5 -: Unterteil von 3
- 6 -: mechanisch-elektrischer Teil von 3
- 7 -: optischer Teil von 3
- 8 -: Hülse
- 9 -: Exzenter
- 10 -: Verriegelungsstift
- 11 -: Rille
- 12 -: Axialbohrung
- 13 -: Zapfen
- 14 -: Kugel
- 15 -: Modul
- 16 -: Dreipunktlagerung
- 17 -: Zylinder
- 18 -: messmaschinenseitiges Kupplungselement
- 19 -: Pin-Kontakt
- 21 -: Ausleger
- 22 -: optische Faser
- 23 -: Ferrule
- 24 -: Ausnehmung
- 25 -: Ende von 23
- 26 -: Fase
- 27 -: Feder
- 30 -: optische Schnittstelle
- 31 -: optische Faser
- 33 -: Kontaktelement
- 34 -: Kontaktelement
- 35 -: Ende von 22
- 36 -: Ende von 31
- 40 -: Fläche
- 41 -: Stirnfläche von 33
- 42 -: Stirnfläche von 34
- 43 -: Schrägschliff
- 44 -: Schrägschliff
- 45 -: Durchtrittsfläche
- 46 -: Strahlquerschnitt
- 48 -: Ferrule
- 50 -: Fase
- 51 -: Führungsbuchse
- 52 -: Ende von 48
- 53 -: Innenfläche von 51
- 54 -: Fase
- 60 -: Hülse
- 61 -: Umfangsseite von 60
- 62 -: Orientierungsfläche
- 63 -: Orientierungselement
- 70 -: Teil des Messmaschinenkopfes
- 71 -: mechanisch-elektrischer Teil
- 72 -: optischer Teil
- 73 -: Einsatz
- 74 -: Bohrung
- 76 -: Stapel
- 77 -: Tellerfeder
- 79 -: Flanschhülse
- 80 -: hutförmiges Teil
- 81 -: Unterlegscheibe
- 82 -: Mutter
- 83 -: Deckel
- 84 -: Leitungselement
- 85 -: Bund
- 86 -: Scheibe
- 87 -: Ende von 48
- 88 -: Ende von 51
- 92 -: Hülse
- 93 -: Fixierungshülse
- 94 -: Ende von 51
- 95 -: Ende von 92
- 96 -: Innenseite von 92
- 97 -: Umfangsseite von 92
- 98 -: Fase
- 99 -: Fase
- 100 -: Seite von 48
- 101 -: Orientierungsfläche
- 102 -: Deckel
- 103 -: Passstift
- 104 -: Schraube
- 105 -: Schraube
- 106 -: Schraube
- 110 -: Fläche von 13
- 112 -: Ende von 13
- 113 -: Erweiterung
- 114 -: Fase

- AR -: axiale Richtung
- GZ -: gekoppelter Zustand
- L -: Länge
- LA -: Längsachse
- ROF -: radiale Richtung
- RR -: radiale Richtung
- α -: Neigungswinkel
- β -: Winkel

## Patentansprüche

1. Optisches Sensorelement für eine Koordinatenmessmaschine, mit einem sensorelementseitigen Kupplungselement (3) zur mechanischen und optischen Verbindung mit einem messmaschinenseitigen Kupplungselement (18),
**gekennzeichnet durch**
eine optische Faser (22) im sensorelementseitigen Kupplungselement (3) zur Messstrahlungsübertragung, die eine optische Schnittstelle (30) zur Verbindung mit einem optischen Maschinenkontaktelement (34) der Messmaschine aufweist, insbesondere für interferometrische Messverfahren, welche **durch** ein optisches Sensorkontaktelement (33) mit einer das Ende der optischen Faser (22) umfassenden selbstzentrierenden Ferrule (23) ausgebildet ist, wobei die Ferrule (23) schwimmend im sensorelementseitigen Kupplungselement (3) gelagert ist.

2. Sensorelement nach Anspruch 1,
**dadurch gekennzeichnet, dass**
die Ferrule (23) eine Fase (50) zur Selbstzentrierung bei einem Verbindungsvorgang mit dem messmaschinenseitigen Kupplungselement (18)aufweist.

3. Sensorelement nach Anspruch 1 oder 2,
**dadurch gekennzeichnet, dass**
das Sensorkontaktelement (33) mit einem Schrägschliff (43) ausgebildet ist, insbesondere wobei die optische Faser (22) eine Singlemode-Faser ist.

4. Sensorelement nach Anspruch 3,
**dadurch gekennzeichnet, dass**
das Sensorkontaktelement (33) einen gegenüber dem Kern der optischen Faser (22) vergrösserten Strahlquerschnitt (46) aufweist, insbesondere der Strahlquerschnitt (46) gegenüber dem Kern der optischen Faser (22) mindestens um den Faktor 5, 10, 20 oder 50 vergrössert ist.

5. Sensorelement nach einem der Ansprüche 3 oder 4, **dadurch gekennzeichnet, dass**
das Sensorkontaktelement (33) eine Linse ist, vorzugsweise eine Gradientenindex-Linse, insbesondere in Form einer Faser.

6. Sensorelement nach einem der vorangehenden Ansprüche,
**dadurch gekennzeichnet, dass**
dass die Ferrule (23) bündig mit dem Sensorkontaktelement (33) abschliesst.

7. Sensorelement nach einem der vorangehenden Ansprüche,
**dadurch gekennzeichnet, dass**
die Ferrule (23) auf einer Umfangsseite (61) eine Orientierungsfläche (62) zum definierten Halten der Ferrule (23) in einer zugeordneten Orientierung aufweist.

8. Sensorelement nach einem der vorangehenden Ansprüche,
**dadurch gekennzeichnet, dass**
die Ferrule (23) durch eine Feder (25), vorzugsweise in axialer Richtung (AR) der optischen Faser (22), zur Erzeugung eines Anpressdrucks an der optischen Schnittstelle (30) beaufschlagt ist.

9. Messmaschinenseitiges Kupplungselement (18) für eine Koordinatenmessmaschine, zur mechanischen und optischen Verbindung mit einem Sensorelement nach einem der Ansprüche 1 bis 8,
**dadurch gekennzeichnet, dass**
das messmaschinenseitige Kupplungselement (18) ein optisches Maschinenkontaktelement (34) zur Verbindung mit einem optischen Sensorkontaktelement (33) des Sensorelements, zur Messstrahlungsübertragung, insbesondere für interferometrische Messverfahren, aufweist, wobei das Maschinenkontaktelement (34) eine optische Faser (31) mit einer Ferrule (48) und eine Führungshülse (51) zur Selbstzentrierung der Ferrulen (23, 48) von Sensorkontaktelement und Maschinenkontaktelement aufweist,
wobei Ferrule (48) und Führungshülse (51) schwimmend im Kupplungselement (18) gelagert sind.

10. Kupplungselement (18) nach Anspruch 9,
**dadurch gekennzeichnet, dass**
die Ferrule (48) und/oder die Führungshülse (51) eine Fase (26,54) zur Selbstzentrierung bei einem Verbindungsvorgang mit dem Sensorelement aufweist.

11. Kupplungselement (18) nach einem der Ansprüche 9 oder 10,
**dadurch gekennzeichnet, dass**
die optische Faser (31) an einem Ende in der Ferrule (48) gefasst und von der Führungsbuchse (51) umfasst ist, wobei die Führungsbuchse in axialer Richtung (AR) über die Ferrule (48) hinausragt und an deren freiem Ende (88) vorzugsweise eine Fase (54) an der Innenfläche (53) vorgesehen ist.

12. Kupplungselement (18) nach einem der Ansprüche 9 bis 11,
**dadurch gekennzeichnet, dass**
das Maschinenkontaktelement (34) mit einem Schrägschliff (44) ausgebildet ist und einen gegenüber dem Kern der optischen Faser (31) vergrösserten Strahlquerschnitt (46) aufweist.

13. Kupplungselement (18) nach einem der Ansprüche 9 bis 12,
**dadurch gekennzeichnet, dass**
eine Innenfläche (53) der Führungsbuchse (51) eine Rundheit mit einer radialen Abweichung aufweist, die kleiner als der Kerndurchmesser der verwendeten Faser ist, insbesondere von maximal 2 µm ist.

14. System aus einem optischen Sensorelement für eine Koordinatenmessmaschine, nach einem der Ansprüche 1 bis 8 und
einem messmaschinenseitigen Kupplungselement (18) zur Verbindung mit dem Sensorelement, mit einem optischen Maschinenkontaktelement (34) zur Verbindung mit dem optischen Sensorkontaktelement (33) des Sensorelements, zur Messstrahlungsübertragung, insbesondere für interferometrische Messverfahren,
wobei das Maschinenkontaktelement (34) eine optische Faser (31) mit einer Ferrule (48) und eine Führungshülse (51) zur Selbstzentrierung der Ferrulen (23, 48) von Sensorkontaktelement und Maschinenkontaktelement aufweist, wobei Ferrule (48) und Führungshülse (51) schwimmend im Kupplungselement (18) gelagert sind.

15. Koordinatenmessmaschine, mit einem System nach Anspruch 14.

## Claims

1. Optical sensor element for a coordinate measuring machine, having a coupling element (3) on the sensor element side for mechanical and optical connection to a coupling element (18) on the measuring machine side,
**characterized by**
an optical fiber (22) for measuring radiation transmission in the coupling element (3) on the sensor element side, that has an optical interface (30) for connection to an optical machine contact element (34) of the measuring machine, in particular for interferometric measurement methods, which optical interface is formed by an optical sensor contact element (33) having a self centering ferrule (23) surrounding the end of the optical fiber (22), the ferrule (23) being supported in a floating fashion in the coupling element (3) on the sensor element side.

2. Sensor element according to Claim 1,
**characterized in that**
the ferrule (23) has a chamfer (50) for self centering during a connecting operation with the coupling element (18) on the measuring machine side.

3. Sensor element according to Claim 1 or 2,
**characterized in that**
the sensor contact element (33) is formed with a ground bevel (43) in particular, the optical fiber (22) being a single mode fiber.

4. Sensor element according to Claim 3,
**characterized in that**
the sensor contact element (33) has a beam cross section (46) enlarged by comparison with the core of the optical fiber (22), in particular the beam cross section (46) being enlarged at least by a factor of 5, 10, 20 or 50 by comparison with the core of the optical fiber (22).

5. Sensor element according to any one of Claims 3 and 4,
**characterized in that**
the sensor contact element (33) is a lens, preferably a gradient index lens, in particular in the form of a fiber.

6. Sensor element according to any one of the preceding claims,
**characterized in that**
the ferrule (23) terminates flush with the sensor contact element (33).

7. Sensor element according to any one of the preceding claims,
**characterized in that**
the ferrule (23) has on a peripheral side (61) an orientation surface (62) for holding the ferrule (23) in a defined fashion in an assigned orientation.

8. Sensor element according to any one of the preceding claims,
**characterized in that**
a spring (25) is applied, preferably in an axial direction (AR) of the optical fiber (22), to the ferrule (23) in order to produce a contact pressure at the optical interface (30).

9. Coupling element (18) on the measuring machine side for a coordinate measuring machine, for mechanical and optical connection to a sensor element according to any one of Claims 1 to 8,
**characterized in that**
the coupling element (18) on the measuring machine side has an optical machine contact element (34) for connection to an optical sensor contact element (33) of the sensor element for the purpose of measuring radiation transmission, in particular for interferometric measurement methods, the machine contact element (34) having an optical fiber (31) with a ferrule (48) and a guide sleeve (51) for self centering of the ferrules (23, 48) of the sensor contact element and machine contact element,
the ferrule (48) and guide sleeve (51) being supported in a floating fashion in the coupling element (18).

10. Coupling element (18) according to Claim 9,
**characterized in that**
the ferrule (48) and/or the guide sleeve (51) have/has a chamfer (26, 54) for self centering during a connecting operation with the sensor element.

11. Coupling element (18) according to any one of Claims 9 and 10,
**characterized in that**
the optical fiber (31) is held at one end in the ferrule (48) and surrounded by the guide sleeve (51), the guide sleeve projecting in an axial direction (AR) beyond the ferrule (48) and preferably being provided at its free end (88) with a chamfer (54) on the inner surface (53).

12. Coupling element (18) according to any one of Claims 9 to 11,
**characterized in that**
the machine contact element (34) is formed with a ground bevel (44) and has a beam cross section (46) that is enlarged by comparison with the core of the optical fiber (31).

13. Coupling element (18) according to any one of Claims 9 to 12,
**characterized in that**
an inner surface (53) of the guide sleeve (51) has a roundness with a radial deviation that is smaller than the core diameter of the fiber used, in particular is at most 2 µm.

14. System comprising an optical sensor element for a coordinate measuring machine according to one of Claims 1 to 8, and
a coupling element (18) on the measuring machine side for connection to the sensor element, having an optical machine contact element (34) for connection to the optical sensor contact element (33) of the sensor element, for the purpose of measuring radiation transmission, in particular for interferometric measurement methods,
the machine contact element (34) having an optical fiber (31) with a ferrule (48) and a guide sleeve (51) for self centering of the ferrules (23, 48) of the sensor contact element and machine contact element, the ferrule (48) and guide sleeve (51) being supported in a floating fashion in the coupling element (18).

15. Coordinate measuring machine, having a system according to Claim 14.

## Revendications

1. Elément capteur optique pour une machine de mesure de coordonnées, avec un élément de couplage (3) du côté de l'élément capteur pour la liaison mécanique et optique avec un élément de couplage (18) du côté de la machine de mesure,
**caractérisé par**
une fibre optique (22) pour la transmission de la radiation de mesure dans l'élément de couplage (3) du côté de l'élément capteur, qui présente une interface optique (30) pour la liaison avec un élément optique de contact avec la machine (34) de la machine de mesure, en particulier pour des procédés de mesure interférométriques, qui est configurée par un élément optique de contact avec le capteur (33) avec une ferrule (23) à centrage automatique qui entoure l'extrémité de la fibre optique (22), la ferrule (23) étant positionnée flottante dans l'élément de couplage (3) du côté de l'élément capteur.

2. Elément capteur selon la revendication 1,
**caractérisé en ce**
**que** la ferrule (23) présente un biseau (50) pour l'autocentrage lors de l'opération de liaison avec l'élément de couplage (18) du côté de la machine de mesure (18).

3. Elément capteur selon la revendication 1 ou 2,
**caractérisé en ce**
**que** l'élément de contact avec le capteur (33) est configuré avec un meulage oblique (43), en particulier la fibre optique (22) étant une fibre monomode.

4. Elément capteur selon la revendication 3,
**caractérisé en ce**
**que** l'élément de contact avec le capteur (33) présente une section de faisceau (46) augmentée par rapport au noyau de la fibre optique (22), en particulier que la section de faisceau est augmentée par rapport au noyau de la fibre optique (22) d'au moins le facteur 5, 10, 20 ou 50.

5. Elément capteur selon l'une des revendications 3 ou 4,
**caractérisé en ce**
**que** l'élément de contact avec le capteur (33) est une lentille, de préférence une lentille à gradient d'indice, en particulier en forme de fibre.

6. Elément capteur selon l'une des revendications précédentes,
**caractérisé en ce**
**que** la ferrule (23) se termine en affleurement avec l'élément de contact avec le capteur (33).

7. Elément capteur selon l'une des revendications précédentes,
**caractérisé en ce**
**que** la ferrule (23) présente, sur un côté périphérique (61), une surface d'orientation (62) pour le maintien défini de la ferrule (23) dans une orientation correspondante.

8. Elément capteur selon l'une des revendications précédentes,
**caractérisé en ce**
**que** la ferrule (23) est chargée par un ressort (25), de préférence dans le sens axial (AR) de la fibre optique (22), pour générer une pression appliquée sur l'interface optique (30).

9. Elément de couplage du côté de la machine de mesure (18) pour une machine de mesure de coordonnées, pour la liaison mécanique et optique avec un élément capteur selon l'une des revendications 1 à 8,
**caractérisé en ce**
**que** l'élément de couplage du côté de la machine de mesure (18) présente un élément optique de contact avec la machine (34) pour la liaison avec un élément optique de contact avec le capteur (33) de l'élément capteur, pour la transmission de la radiation de mesure, en particulier pour des procédés de mesure interférométriques, l'élément de contact avec la machine (34) présentant une fibre optique (31) avec une ferrule (48) et une douille de guidage (51) pour l'autocentrage des ferrules (23, 48) de l'élément de contact avec le capteur et de l'élément optique de contact avec la machine,
la ferrule (48) et la douille de guidage (51) étant positionnées flottantes dans l'élément de couplage (18).

10. Elément de couplage (18) selon la revendication 9,
**caractérisé en ce**
**que** la ferrule (48) et/ou la douille de guidage (51) présente un biseau (26, 54) pour l'autocentrage lors d'une opération de liaison avec l'élément capteur.

11. Elément de couplage (18) selon l'une des revendications 9 ou 10,
**caractérisé en ce**
**que** la fibre optique (31) est sertie à une extrémité dans la ferrule (48) et est entourée par la douille de guidage (51), la douille de guidage faisant saillie dans le sens axial (AR) au-delà de la ferrule (48) et de préférence un biseau (54) étant prévu à son extrémité libre (88) sur la surface intérieure (53).

12. Elément de couplage (18) selon l'une des revendications 9 à 11,
**caractérisé en ce**
**que** l'élément de contact avec la machine (34) est configuré avec un meulage oblique (44) et présente une section de faisceau (46) augmentée par rapport au noyau de la fibre optique (31).

13. Elément de couplage (18) selon l'une des revendications 9 à 12,
**caractérisé en ce**
**qu'**une surface intérieure (53) de la douille de guidage (51) présente une rondeur avec une divergence radiale qui est plus petite que le diamètre du noyau de la fibre utilisée, en particulier de 2 µm maximum.

14. Système composé d'un élément capteur optique pour une machine de mesure de coordonnées, selon l'une des revendications 1 à 8, et
un élément de couplage du côté de la machine de mesure (18) pour la liaison avec l'élément capteur, avec un élément optique de contact avec la machine (34) pour la liaison avec l'élément optique de contact avec le capteur (33) de l'élément capteur, pour la transmission de la radiation de mesure, en particulier pour des procédés de mesure interférométriques,
l'élément de contact avec la machine (34) présentant une fibre optique (31) avec une ferrule (48) et une douille de guidage (51) pour l'autocentrage des ferrules (23, 48) de l'élément de contact avec le capteur et de l'élément de contact avec la machine, la ferrule (48) et la douille de guidage (51) étant positionnées flottantes dans l'élément de couplage (18).

15. Machine de mesure de coordonnées, avec un système selon la revendication 14.
